# EUROPEAN PATENT SPECIFICATION

(11) **EP 1 787 885 B1**
(45) Date of publication and mention of the grant of the patent: **01.04.2009**
(21) Application number: 06124450.5
(22) Date of filing: 21.11.2006
(51) Int. Cl.: B60R 19/38

(54) **Transport vehicle having wheels with tyres**
Transportfahrzeug mit Rädern mit Luftreifen
Véhicule de transport doté de roues avec pneus

(30) Priority: 21.11.2005 FR 0511759
(43) Date of publication of application: 23.05.2007
(73) Proprietor: Iveco France S.A., 69200 Vénissieux (FR)
(72) Inventor: Desneux, Alexandre, 38460 Chamagnieu (FR)
(74) Representative: Borsano, Corrado

(56) References cited:
- DE-A1- 2 636 656
- DE-A1- 3 405 872
- FR-A1- 2 311 699
- US-A1- 4 445 440

## Description

The present invention concerns a transport vehicle having wheels with tyres.

The invention is aimed at all types of transport vehicle whose route involves at least one station stop, during which people are likely to board the vehicle, and also to alight from it. It is aimed at such a vehicle, which may or may not be driven in a dedicated lane, in particular by means of electric wires, of rails or even by optic means.

This type of transport vehicle typically includes a chassis mounted on at least one axle, which supports wheels having rubber tyres. In these conditions, transport vehicles in the sense of the invention include in particular, but not exclusively, buses and also trolleybuses.

Known are guiding devices for vehicles adapted to follow dedicated lanes between elevated sides, such as the device according to DE 34 05 872, disclosing all features of the pramble of claim 1, this system comprises rollers adapted to run on the sides and may be retractable when not needed.

This having been specified, the invention aims to propose a transport vehicle which permits shorter boarding and alighting times for the passengers at the stop, while guaranteeing that the sides of the wheels are protected, and comprising a simplified means of movement of a lateral anti-wear element.

To this end, it has as its object a transport vehicle, in particular a bus or a trolleybus, which includes a body, resting on at least one axle that is connected to wheels fitted with tyres, the vehicle having at least one anti-wear element, moving laterally with respect to the body, between a retracted position in which it is retracted with respect to one side of the aforesaid tyre, and an open position, in which it protrudes laterally alongside the side of the tyre, in such a way as to rub against an edging, such as a platform, thus reducing the wear on said side of the tyre, further including first means of movement, suitable to move the anti-wear element from its retracted position to its open position, as well as a second means of movement, suitable to move the anti-wear element from its open position to its retracted position, **characterised in that** - the first means of movement are spring mechanisms, while the second means of movement comprise a device to compress said spring mechanism.

According to other characteristics of the invention:
- the compression device is connected to an energy source that is part of the vehicle, in particular of a pneumatic, electric or hydraulic nature;
- the anti-wear element is joined to the body by means of a bellows;
- the anti-wear element extends in a longitudinal direction, in the lower part of the body;
- four anti-wear elements are provided for, to be placed on both sides of each wheel.

The invention will be better understood and other advantages of said invention will become clearer in the light of the following description of a method of implementation of a transport vehicle according to its principle, given purely by way of example and with reference to the annexed drawings, in which:
- figure 1 is a side view, illustrating a transport vehicle corresponding to the invention; and
- figures 2 and 3 are front views, illustrating on a larger scale two positions of an anti-wear element fitted onto the vehicle in figure 1.

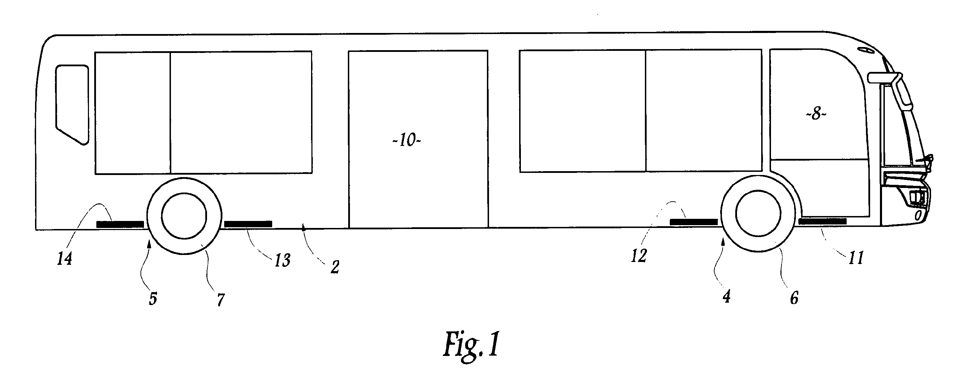

The transport vehicle illustrated in figure 1, which is a bus or a trolleybus, includes in a known manner a body 2, which is fitted onto a front axle 4, as well as a rear axle 5. These two axles 4 and 5 are equipped with wheels, numbered 6 and 7 respectively. Typically, it also has a front door 8, as well as a rear door 10.

Four anti-wear elements 11, 12, 13 and 14, corresponding to this invention, are included either side of each wheel 6 and 7, on the side of the vehicle. Said anti-wear elements, which extend longitudinally, shall be described in more detail below.

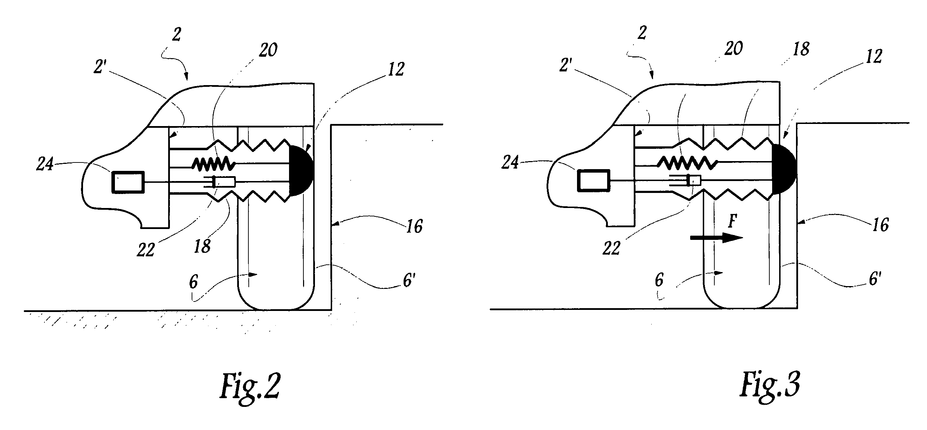

Figures 2 and 3 illustrate, on a larger scale and a different angle to figure 1, the anti-wear element 12 placed immediately behind the front wheel 6. However, the other anti-wear elements 11, 13 and 14 are in every way identical to that, 12, which shall be described here.

Said figures 2 and 3 show the body 2, illustrated schematically, as well as the front wheel 6. The body forms a shoulder 2', next to which is placed the anti-wear element 12. The latter consists of a flange suitable to rub against a platform 16.

In these conditions, the anti-wear element is made of a material that is appropriate in view of said rubbing, so that it can take the place of the tyre on the wheel 6. By way of a non-limitative example of such a material, we mention rubber in particular.

The anti-wear element 12 is joined to the lower part of the body by means of an exterior bellows 18. Furthermore, a pre-stressed compression spring 20 joins the body and the anti-wear element 12, being suitable to push it against the platform in a horizontal direction.

Finally, a pneumatic element 22 of a known type, is suitable to compress the spring 20, so as to prevent it from pushing the anti-wear element 12. This pneumatic element 22 is connected to an energy source 24, belonging to the vehicle, which is for example an air compressor driven by the vehicle's diesel engine. As a variation, note that the pneumatic element 22, as well as the energy source 24 to which it is connected, can be of a type other than pneumatic, in particular electric or hydraulic.

The use of the anti-wear element 12, as described above, shall now be illustrated.

When the vehicle is travelling normally between two stops, the anti-wear element 12 is retracted with respect to the wheel 6, that is to say that it is retracted from the side 6' of the tyre on said wheel 6. To this end, the pneumatic element 22 compresses the spring 20, which thus becomes shorter and does not therefore push the anti-wear element 12 to the other side of the body 2 (figure 2).

Upon approaching the platform 16, the pneumatic element 22 must be deactivated, so that it no longer compresses the spring 20. The latter then lengthens so as to push the anti-wear element 12 in the direction of said platform 16. This movement, illustrated in figure 3, is represented by arrow F.

Consequently, if the vehicle moves closer to the side of the platform, the latter comes into contact with the anti-wear element 12, which rubs against the platform so that the anti-wear element substitutes the tyre. In other words, the rubbing of the anti-wear element 12 against the platform 16 replaces that endured, in the state of the art, by the side 6' of the tyre against said platform.

Thanks to this invention, we can therefore see that it is possible for the vehicle to approach the platform at close distance without, however, damaging its tyres. Consequently, given that the distance between the vehicle and the platform is small, this guarantees that a particularly short time is needed for passengers to board and alight, while preserving the mechanical integrity of the tyre.

Finally, note that, in its retracted position, the anti-wear element does not exceed the overall width of the vehicle. In such conditions, it is not likely to cause any disturbance to its outside environment, particularly to pedestrians or cyclists.

## Claims

1. Transport vehicle, in particular a bus or trolleybus, comprising a vehicle body (2) resting on at least one axle (4, 5) joined to wheels (6, 7) fitted with tyres, said vehicle having at least one anti-wear element (11, 12, 13, 14), moving laterally with respect to the body (2) between a retracted position in which it is retracted with respect to a side (6') of said tyre, and an open position, in which it protrudes laterally with respect to said side (6') so that it rubs against an edge such as a platform (16) thus reducing the wear on this side (6') of the tyre, further including a first means of movement (20), suitable for moving the anti-wear element (12) from its retracted position towards its open position, as well as a second means of movement (22) suitable to move the anti-wear element (12) from its open position to its retracted position, **characterised in that** the first means of movement are spring mechanisms (20), whereas the second means of movement include a compression device (22) for said spring mechanisms (20).

2. Transport vehicle according to claim 1, **characterised in that** the compression device (22) is connected to an energy source (24) belonging to the vehicle, in particular of pneumatic, electric or hydraulic nature.

3. Transport vehicle according to any one of the previous claims, **characterised in that** the anti-wear element (12) is joined to the body (2) by means of a bellows (18).

4. Transport vehicle according to any one of the previous claims, **characterised in that** the anti-wear element extends in a longitudinal direction, in the lower part of the vehicle body (2).

5. Transport vehicle according to claim 4, **characterised in that** there are four anti-wear elements (11, 12, 13, 14), arranged on either side of each wheel (6, 7).

## Patentansprüche

1. Transportfahrzeug, im Besonderen ein Bus oder ein Omnibus, umfassend einen auf zumindest einer mit Rädern (6, 7), an die Reifen angepasst sind, verbundenen Achse (4, 5) ruhenden Fahrzeugkörper (2), wobei das Fahrzeug zumindest ein Antiverschleißelement (11, 12, 13, 14) aufweist, das sich hinsichtlich des Körpers (2) quer zwischen einer zurückgezogenen Position, in der es hinsichtlich einer Seite (6') des Reifens zurückgezogenen ist, und einer geöffneten Position bewegt, in der es hinsichtlich der Seite (6') derart quer hervorsteht, dass es gegen eine Kante wie einen Gehweg reibt, wodurch der Verschleiß an dieser Seite (6') des Reifens reduziert wird, weiter aufweisend ein erstes Bewegungsmittel (20), das zum Bewegen des Antiverschleißelements (12) aus seiner zurückgezogenen Position in Richtung seiner geöffneten Position geeignet ist, und ein zweites Bewegungsmittel (22), das geeignet ist, das Antiverschleißelements (12) aus seiner geöffneten Position in seine zurückgezogene Position zu bewegen,
**dadurch gekennzeichnet, dass**
das erste Bewegungsmittel ein Federmechanismus ist (20), während das zweite Bewegungsmittel eine Kompressorvorrichtung (22) für den Federmechanismus (20) ist.

2. Transportfahrzeug gemäß Anspruch 1, **dadurch gekennzeichnet, dass** die Kompressorvorrichtung (22) mit einer zum Fahrzeug gehörigen Energiequelle (24), im Besonderen pneumatischer, elektrischer oder hydraulischer Natur, verbunden ist.

3. Transportfahrzeug gemäß einem der vorangegangenen Ansprüche, **dadurch gekennzeichnet, dass** das Antiverschleißelement (12) mit Hilfe eines Balgs (18) an den Körper (2) angebunden ist.

4. Transportfahrzeug gemäß einem der vorangegangenen Ansprüche, **dadurch gekennzeichnet, dass** sich das Antiverschleißelement im unteren Bereich des Fahrzeugkörpers (2) in einer Längsrichtung erstreckt.

5. Transportfahrzeug gemäß Anspruch 4, **dadurch gekennzeichnet, dass** vier an beiden Seiten jedes Rades (6, 7) angeordnete Antiverschleißelemente (11, 12, 13, 14) vorhanden sind.

## Revendications

1. Véhicule de transport, en particulier un bus ou trolleybus, comprenant un corps de véhicule (2) reposant sur au moins un essieu (4, 5) assemblé aux roues (6, 7) équipées de pneus, ledit véhicule ayant au moins un élément anti-usure (11, 12, 13, 14), se déplaçant latéralement par rapport au corps (2) entre une position rétractée dans laquelle il est rétracté par rapport à un côté (6') dudit pneu, et une position ouverte dans laquelle il fait saillie latéralement par rapport audit côté (6') de sorte qu'il frotte contre un bord tel qu'une plateforme (16) réduisant ainsi l'usure sur ce côté (6') du pneu, comprenant en outre des premiers moyens de déplacement (20) appropriés pour déplacer l'élément anti-usure (12) de sa position rétractée vers sa position ouverte, ainsi que des seconds moyens de déplacement (22) appropriés pour déplacer l'élément anti-usure (12) de sa position ouverte à sa position rétractée, **caractérisé en ce que** les premiers moyens de déplacement sont des mécanismes à ressort (20), alors que les seconds moyens de déplacement comprennent un dispositif de compression (22) pour ledit mécanisme à ressort (20).

2. Véhicule de transport selon la revendication 1, **caractérisé en ce que** le dispositif de compression (22) est raccordé à une source d'énergie (24) appartenant au véhicule, en particulier de nature pneumatique, électrique ou hydraulique.

3. Véhicule de transport selon l'une quelconque des revendications précédentes, **caractérisé en ce que** l'élément anti-usure (12) est assemblé au corps (2) au moyen d'un soufflet (18).

4. Véhicule de transport selon l'une quelconque des revendications précédentes, **caractérisé en ce que** l'élément anti-usure s'étend dans une direction longitudinale, dans la partie inférieure du corps de véhicule (2).

5. Véhicule de transport selon la revendication 4, **caractérisé en ce que** l'on trouve quatre éléments anti-usure (11, 12, 13, 14) agencés de chaque côté de chaque roue (6, 7).
